# EUROPEAN PATENT SPECIFICATION

(11) **EP 4 377 688 B1**
(45) Date of publication and mention of the grant of the patent: **27.05.2026**
(21) Application number: 22783589.9
(22) Date of filing: 15.07.2022
(51) Int. Cl.: G01N 30/82, B01D 15/24, G01N 30/86, G01N 30/88

(54) **REAL TIME PEAK INTEGRATION FOR POOL COLLECTION CRITERIA VIA CHROMATOGRAPHIC AREA UNDER THE CURVE**
ECHTZEIT-SPITZENINTEGRATION FÜR POOLSAMMELKRITERIEN ÜBER EINEN CHROMATOGRAPHISCHEN BEREICH UNTER DER KURVE
INTÉGRATION DE PIC EN TEMPS RÉEL POUR DES CRITÈRES DE COLLECTE DE GROUPE PAR LE BIAIS D'UNE ZONE CHROMATOGRAPHIQUE SOUS LA COURBE

(30) Priority: 27.07.2021 US 202163226149 P
(43) Date of publication of application: 05.06.2024
(73) Proprietor: Amgen Inc., Thousand Oaks, CA 91320 (US)
(72) Inventor: ZINN, Erik, E., Thousand Oaks, CA 91320-1799 (US); WOEHLE, Diana, Thousand Oaks, CA 91320-1799 (US); MALY, Cassidy, Thousand Oaks, CA 91320-1799 (US); HAN, Xuejun, Thousand Oaks, CA 91320-1799 (US); QUITAYEN, Kylee, Celine, Thousand Oaks, CA 91320-1799 (US)
(74) Representative: J A Kemp LLP
(86) International application number: PCT/US2022/037239
(87) International publication number: WO 2023/009328

(56) References cited:
- WO-A1-2021/099465
- US-A1- 2009 314 716
- US-A1- 2020 018 771

## Description

### FIELD OF THE INVENTION

The present disclosure is generally directed to the field of real time peak integration for pool collection criteria via chromatographic area under the curve, and more specifically, to methods and systems for improving gradient elution by consistently determining collection points to reduce product-related impurities while also capturing desired products.

### BACKGROUND

Conventional elution techniques that rely on chromatography elution processes and procedures may be inconsistent, both in terms of optimizing desired product collection and avoidance of impurities. A large gap in product quality exists between recombinant proteins expressed during cell cultures and required target product qualities. This gap may be due to the presence of product-related impurities that negatively affect product quality. The gap between actual and desired product quality leads to a series of problems. For example, product-related impurities prevent consistent purified elution products (e.g., a drug substance), leading to products that fail to meet product quality requirements. US 2009/314716 discloses a technique for extracting an objective component from a sample solution.

Product-related impurities may be due to the inadvertent or unavoidable collection of variants or analogs of one or more products of interest (e.g., one or more proteins collected during an elution process). For example, product related impurities may include high molecular weight variants, low molecular weight variants, protein aggregates, proteins with post-translational modifications, etc. Such impurities may be similar to desired products, and as such, may elute readily from a chromatography media along with a desired product (e.g., immediately prior to, or immediately following elution of the desired product).

When product-related impurities are mixed with a desired product, aspects of the collected product are negatively affected. Such negative outcomes have an impact on product quality, product titer, product activity, product purity, etc. Such impurities must be subsequently reduced completely or reduced to negligible levels, or the product may be ruined and unusable (e.g., as a drug product). Thus, the inability of current techniques to maximize product collection and/or to minimize the inclusion of impurities is generally responsible for problems including inefficient use of elution media equipment, in addition to wasting capital and human resources to repeat or remediate inadequate product collection processes.

Existing strategies fail to address both consistent production collection and impurity reduction interests. For example, an anion exchange chromatography purification strategy may improve upon impurity removal, while failing to produce repeatable results, due to inconsistent collection of desired product during the elution process. Thus, there is a need for improved techniques for consistently determining collection points to generate processes that consistently avoid impurities while also efficiently capturing desired products.

### SUMMARY

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes. In one aspect, a computing system for improving control of process and automation systems to improve consistency and yield of elution product collection while avoiding impurities includes one or more processors; an elution collection controller application including computing instructions configured to be executed by the one or more processors; and a peak area estimation model, electronically accessible by the elution collection controller application and configured to analyze real-time process data received from the elution collection controller application to estimate one or more area under curve collection criteria. The instructions included in the elution collection controller application may be configured, when executed by the one or more processors, to: (i) receive initialization data including a column load mass and an initial collection ratio corresponding to one or more elution products; (ii) instantiate a communication link to a process control or automation system; (iii) determine an estimated total peak area and an area collection criteria corresponding to the one or more elution products; (iv) cause, via the communication link, the process control or automation system to begin collection of the one or more elution products; (v) read, via the communication link, one or more data values from the process control or automation system; (vi) compute, via the peak area estimation model analyzing the one or more data values, a ratio of collected area under curve corresponding to the collection of the one or more elution products to the collection criteria; and (vii) based on the ratio of collected area under curve to collection criteria, cause, via the communication link, the process control or automation system to cease collection of the one or more elution products.

In another aspect, a computer-implemented method for improving control of process and automation systems to improve consistency and yield of elution product collection while avoiding impurities includes (i) receiving, via one or more processors, initialization data including a column load mass and an initial collection ratio corresponding to one or more elution products; (ii) instantiating, via the one or more processors, a communication link to a process control or automation system; (iii) determining, via the one or more processors, an estimated total peak area and an area collection criteria corresponding to the one or more elution products; (iv) causing, via the communication link, the process control or automation system to begin collection of the one or more elution products; (v) reading, via the communication link, one or more data values from the process control or automation system; (vi) receiving, from a peak area estimation model analyzing the one or more data values, a ratio of collected area under curve corresponding to the collection of the one or more elution products to the collection criteria; and (vii) based on the ratio of collected area under curve to collection criteria, causing, via the communication link, the process control or automation system to cease collection of the one or more elution products.

In yet another aspect, a non-transitory computer readable medium includes program instructions that when executed, cause a computer to: (i) receive initialization data including a column load mass and an initial collection ratio corresponding to one or more elution products; (ii) instantiate a communication link to a process control or automation system; (iii) determine an estimated total peak area and an area collection criteria corresponding to the one or more elution products; (iv) cause, via the communication link, the process control or automation system to begin collection of the one or more elution products; (v) read, via the communication link, one or more data values from the process control or automation system; (vi) compute, via a peak area estimation model analyzing the one or more data values, a ratio of collected area under curve corresponding to the collection of the one or more elution products to the collection criteria; and (vii) based on the ratio of collected area under curve to collection criteria, cause, via the communication link, the process control or automation system to cease collection of the one or more elution products.

### BRIEF DESCRIPTION OF THE FIGURES

Figure 1 depicts a computing environment for improving control of process and automation systems to improve consistency and yield of elution product collection while avoiding impurities, according to one embodiment.
Figure 2 depicts an exemplary graph of a pool collection process for improving control of process and automation systems to improve consistency and yield of elution product collection while avoiding impurities, according to an embodiment.
Figure 3 depicts a flow diagram of an exemplary computer-implemented method for improving control of process and automation systems to improve consistency and yield of elution product collection while avoiding impurities, according to one embodiment and scenario.

### DETAILED DESCRIPTION

### Overview and Advantages

The embodiments described herein relate to, *inter alia,* techniques for performing real-time peak integration for pool collection criteria via chromatographic area under the curve (AUC), and more particularly, to methods and systems for controlling process control or automation systems (*e.g*., one or more remote process control or automation systems) by determining product collection stop and/or start points during elution to optimize collection of products having desired product quality attributes while avoiding impurities.

As discussed above, conventional techniques are inconsistent. For example, conventional elution may allow product analogs to be collected along with desired products. Existing process control and process automation systems do not include functionality that enables collection to be granularly and precisely parameterized and/or controlled, as provided by the present techniques.

This lack of granular and specific control of processes is a severe problem in the prior art, for several reasons. As discussed above, in the manufacture of some products (*e.g*., biosimilar drugs) several process performance indicators (PPIs) must be consistently met, otherwise, the products generated during such manufacture are not certifiable and cannot be used. This leads to unnecessary expenditures of time and waste of valuable material resources.

Conventional systems may include built-in peak integration functionality that does not account for specifics of each product used, or that causes other problems due to lack of tuning and functionality. For example, using onboard peak integration functionality of conventional systems (*e.g*., an ÄKTA pure system, an ÄKTA avant system, etc.) may result in extreme process variability, rendering inconsistent elution results over many runs. Delayed gradient start and/or gradient overshooting may result in products that do not meet PPI criteria. Unlike the present techniques, conventional systems cannot be parameterized granularly at runtime. Thus, the present techniques solve the problems present in the prior art by, *inter alia,* removing the sensitivity of peak shapes from industrial processes, enabling robust and repeatable processes that maximize yield and minimize impurities.

The invention is further described in the following examples. The examples serve only to illustrate the invention and are not intended to limit the scope of the invention in any way.

### Exemplary Computing Environment

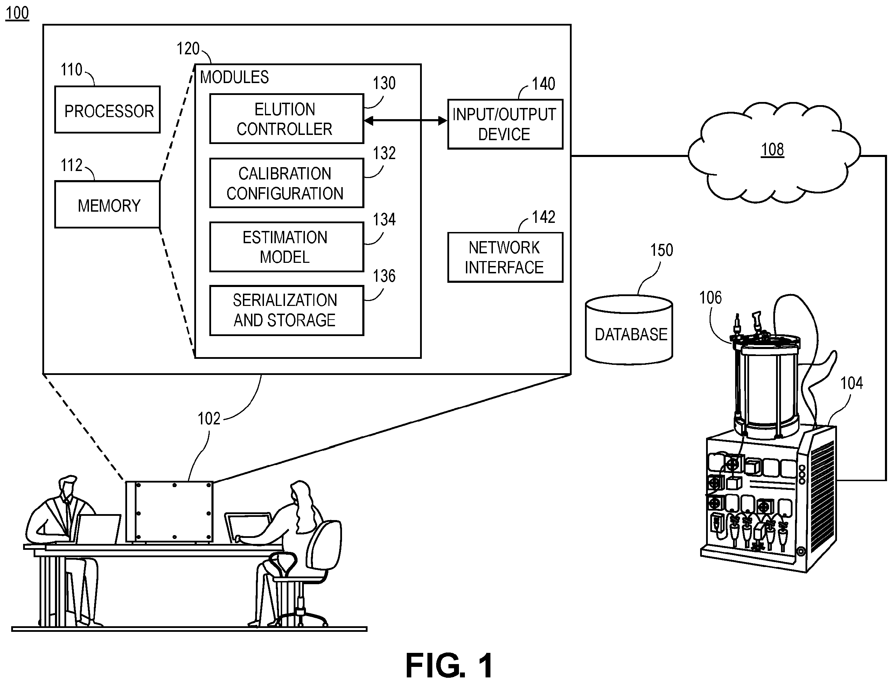

Figure 1 depicts a computing environment 100 for improving control of process and automation systems to improve consistency and yield of elution product collection while avoiding impurities, according to one embodiment. The computing environment 100 may include a client computing device 102, a remote process control system 104 that is communicatively coupled to a chromatography column 106, and an electronic network 108. Any of the client computing device 102, the remote process control system 104 and the chromatography column 106 may be communicatively coupled to one another via the electronic network 108. This coupling may enable bidirectional networked communication between any/all of the components of the computing environment 100. For example, the client device 102 may communicate bidirectionally (e.g., via one or more Open Platform Communication (OPC) links) with the remote process control system 104.

The client computing device 102 may comprise one or more computers that may be respectively implemented in a desktop, virtualized and/or cloud computing environment, for example. In some embodiments, the client computing device 102 may be implemented as a mobile computing device (*e.g.,* a laptop, a tablet, a mobile phone, a wearable device, etc.). The client computing device 102 may include a processor 110 and a memory 112. While referred to in the singular, the processor 110 may include any suitable number of processors of one or more types (*e.g.,* one or more central processing units (CPUs), graphics processing units (GPUs), cores, etc.). The memory 112 may comprise one or more memories of one or more types (*e.g.,* persistent memory, solid state memory, random access memory (RAM), etc.), and may store one or more modules 120. The client computing device 102 may further include an I/O device 140 and a network interface 142, and may be communicatively coupled to an electronic database 150.

The remote process control system 104 may include one or more electro-mechanical device that includes one or more apparatuses for controlling the chromatography column vessel 106. For example, the remote process control system 104 may include one or more valves of feed tubes leading to the chromatography column vessel 106. The remote process control system 104 may include a motor for operating a piston flange. The remote process control system 104 may include mechanical apparatuses (*e.g.,* hydraulics) for opening and closing the top and bottom of the chromatography column vessel 106, and/or for configuring one or more physical ports (*i.e.,* an inlet or outlet) of the chromatography column 106. The chromatography column 106 is described in further detail, below.

In some embodiments, the remote process control system 104 may include one or more gauges (*e.g.,* a pressure gauge) for monitoring the contents of the chromatography column vessel 106. The remote process control system 104 may include computer components (*e.g*., a programmable breadboard) for remotely controlling each of the apparatuses in the remote process control system 104. The control unit remote process control system 104 may further include a CPU, RAM and operating system (not depicted) for enabling a remote computing device (*e.g.,* the computing device 102) to receive/retrieve data from the remote process control system 104. For example, the remote process control system 104 may include one or more software libraries that enable the computing device 102 to access properties and information contained within the remote process control system 104.

For example, when the remote process control system 104 is an ÄKTA pure protein purification system may be accessible via a digital protocol (*e.g.,* an Open Platform Communication (OPC) link). In that case, computing device 102 may disable or override default functionality of the remote process control system 104 to improve thereupon. For example, an ÄKTA pure system may, by default, perform peak integration on its own, wherein a client device specifies start collection and end collection thresholds, as a percentage of peak max. However, as noted above, the lack of granular control over such peak integration may lead to gradient overshooting, non-reproducible elution results, etc. The same problems may be present in other remote process control system 104 embodiments (*e.g.,* when the remote process control system 104 is an Emerson DeltaV Automation System). The disabling/override functionality may be performed by one of the modules 120 of the client computing device 102 (*e.g.,* the elution controller module 130).

The chromatography column vessel 106 may be a chromatography column vessel of any suitable dimensions. For example, in some embodiments, the chromatography column vessel 106 may be a column of 1.6 meters in diameter. In some embodiments the vessel 106 may be made of polymer, plastic and/or metal (*e.g.,* various steel alloy(s)). In some embodiments, a portion of the chromatography column vessel 106 is packed with material (*e.g.,* a slurry, a buffer, etc.). The medium in the chromatography column vessel 106 may be any suitable material. The medium may be unpressurized or pressurized to various pressure levels (*e.g.,* from 1-30psi, or higher). The piston of the chromatography column vessel 106 may compress the medium to a predetermined height to achieve pressurization.

It will be appreciated by those of ordinary skill in the art that the specific configuration of the vessel 106, including its size, may be determined in respective embodiments by reference to the products being eluted (e.g., the composition of one or more proteins), the media included within the column, the configuration/ properties remote process control system 104, etc. For example, a bench scale remote process control system 104 may call for bench-sized vessel(s) 106 whereas an industrial scale remote process control system 104 may call for much larger vessel(s) 106.

The network 108 may include one or more suitable wireless networks, such as a WAN (*e.g.,* he Internet), a LAN, a 3G or 4G network, a WiFi network or other wireless local area network (WLAN), a satellite communication network, and/or a terrestrial microwave network, for example. In some embodiments, the network 108 also includes one or more wired networks, such as Ethernet.

The one or more modules 120 may include one or more sets of computer-executable instructions, for example, configured to perform respective functions. For example, the one or more module 120 may include an elution controller module 130, a calibration configurator module 132, an estimation model 134 and a parsing and storage model 136.

The elution controller module 130 may include computer-executable instructions for accessing the remote process control system 104. For example, the elution controller module 130 may include a class library having a plurality of methods/functions (*e.g.,* an AktaClass) that enable the elution controller module 130 to access capabilities of an ÄKTA pure system, in an embodiment. The library of functions in the elution controller module 130 may include an object-oriented class having a set of methods. The set of supported methods may include, for example, the following methods, included functionality and return codes (where applicable):

| **Exemplary Method** | **Exemplary Functionality** |
|---|---|
| **control(*self*)** | Takes control of remote process control system 104 through the communication link. Enables sending commands to the remote process control system 104. |
| | Retval: 1 (success) |
| **release(*self*)** | Releases control of the remote process control system 104 through the communication link. Allows remote user to take direct control of remote process control system 104 if necessary. |
| | Retval: 1 (success) |
| **read(*self*)** | Reads one or more data values from remote process control system 104 and parses the data values into a data format (*e.g*., JSON, XML, CSV, etc.). Example JSON output: {'UV': '2AU','wavelength' : '210nm', 'AccumulatedVolume' : '42mL'} |
| | Retval: successfully parsed data. |
| **collect(*self*, *inlet*/*outlet*)** | Triggers the remote process control system 104 to switch outlet/ inlet valve to the appropriate position to initiate/ cease collecting the product. |
| | Checks that the outlet/ inlet has been changed successfully and |
| | Retval: statement confirming the change. |
| **close(*self*)** | Closes the communication link. |

More or fewer methods supporting additional/different functionality may be included, in some embodiments. In still further embodiments, the elution controller module 130 instructions may include constructor classes that cause connections (*e.g.,* OPC connections) to be made once when the AktaClass is instantiated, and which connections remain connected until the AktaClass instance is garbage collected. The above described AktaClass example is but one example. It will be appreciated by those of ordinary skill in the art that additional classes may be included (*e.g*., DeltaVClass) that include more or fewer class methods, additional sub-classes, and/or different functionality/interfaces altogether. Regardless, the elution controller module 130 generally includes all of the sets of computer-executable instructions necessary to control one or more remote process control systems 104, potentially of many different makes/manufacturers.

The calibration configurator module 132 may include computer-executable instructions for determining one or more coefficients by analyzing one or more historical calibration curves on a per-product basis. For example, the calibration configurator module 132 may use a suitable technique such as linear regression, machine learning, etc. to determine coefficients corresponding to a product. The calibration configurator module 132 may store the determined coefficients in the database 150 in association with and identifier of the product. In this way, another module (*e.g.,* the elution controller module 130) may query the database, passing a product identifier, to retrieve an associated coefficient for use in computations (*e.g.,* for computing total peak area in view of a load mass parameter at runtime). In some embodiments, the calibration configurator module 132 may include computer-executable instructions for generating the calibration curves, by generating lab experiments measuring area under the curve for respective masses loaded, and performing linear regressions.

The estimation model 134 may include computer-executable instructions for receiving one or more data values read from the process control or automation system 104 via the elution controller 130. In some embodiments, the one or more data values may be parsed/formatted values. The estimation model 134 may include instructions for computing an estimated peak area under the curve using the trapezoidal rule. The estimation model 134 may include one or more ordered data structures (*e.g.,* a respective list, or array). The estimation model 134 may store each of the one or more data values in a respective one of the one or more data structures, repeatedly for many data points (*i.e.,* time series) corresponding to data read from a chromatography column. The estimation model 134 may compute estimated peak area under the curve for each time step, such that the area under the curve can be monitored over time. For example, the elution controller 130 may iteratively read data from the chromatography column 106 after initializing data collection.

At each of the iterations, or time steps, the estimation model 134 may re-compute an updated area under the curve using the latest data values. Further, at each iteration/time step, the estimation model 134 may store delta (*i.e.,* change) values, such as an accumulated volume delta computed by subtracting the latest accumulated volume value from the second-latest accumulated volume value. This delta, which may be persisted over iterations in its own indexed data structure, is made possible by the persistent array of accumulated volume values that the estimation model 134 can refer to by index upon later iterations. In some embodiments, the estimation model 134 may compute aggregated or snapshot values based on the respective data structures, such as a five minute moving average, a rate of change, etc.

The estimation model 134 may estimate peak area under the curve using the trapezoidal rule. Specifically, the estimation model 134 may compute a fractional area under the curve at each iteration or time step by, for example, multiplying the latest delta volume by the average of the two latest ultraviolet absorption values. The area under the curve value may be updated at each time step, by adding the fractional area under the curve value to the area under the curve value at the previous time step/ iteration. The estimation module 134 may compute the area under the curve as a percentage of peak collection criteria at each iteration/ time step by dividing the latest area under the curve value by the total peak area.

The serialization and storage module 136 may include computer-executable instructions for converting data (*e.g.,* the data values read from the process control or automation system 104) to serialized data such as by converting formatted, parsed data from the process control or automation system 104 in a serialized data format (*e.g.,* data frame, pickled data format, etc.). In some embodiments, the serialization and storage module 136 may include instructions for persisting all data collected during the method 300. For example, the storage module 136 may store all input parameters, data structures of time series, and raw data received from the remote process control system 104 in the database 150, and/or in the memory 112. Once serialized and stored, another module (*e.g.,* the calibration configurator module 132) may query and retrieve the stored data. In some embodiments, the memory 112 may include fewer or more modules.

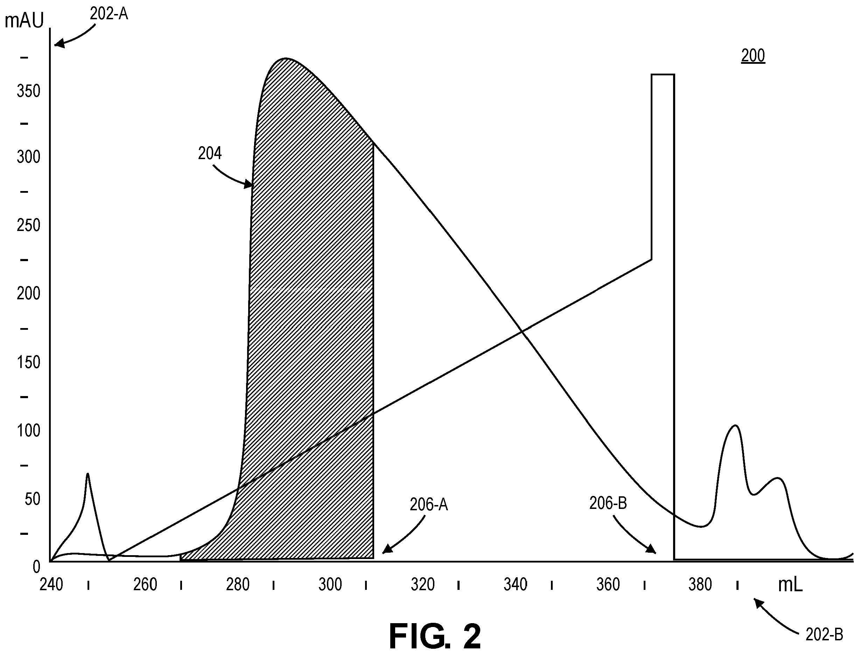

The computer-executable instructions implementing the modules 120 may be authored in one or more suitable programming languages (*e.g.,* C, C++, R, Java, Python, JavaScript, LISP, etc.) and may include algorithms for performing the above-described techniques, as well as additional instructions for assisting end users (*e.g.,* engineers, scientists, programmers, quality assurance testers, statisticians, etc.) in constructing, parameterizing, evaluating and/or interpreting (*e.g.,* by visualizing) data, as shown in Figure 2.

The I/O device 140 may provide input and access capabilities to the computing device 102. For example, the I/O device 140 may include one or more drivers for receiving input from computer peripherals (*e.g.,* a keyboard, a mouse, a microphone, etc.) and for transmitting output to computer peripherals and other devices (*e.g.,* one or more computer monitors). In general, the I/O device 140 enables users of the client computing device to enter data via one or more graphical user interfaces, both for administering the software modules 120 and for providing runtime parameters (*e.g.,* those product-specific parameters discussed herein). The I/O device 140 may display one or more applications (*e.g.,* an elution control application) to the user in a computer monitor, smart phone/tablet display, etc.

The network interface 142 may include one or more wired or wireless Ethernet interfaces, enabling low-level network connectivity of the client computing device. In particular, the network interface 142 may enable the client computing device 102 to connect to the electronic network 108 using operating-system (*i.e.,* kernel) level functions.

The electronic database 150 may be a Structured Query Language (SQL) database, a key-value store database (*e.g.,* MongoDB), a flat file database, etc. The database 150 may be stored in local transient memory 112 of the client computing device 102, and/or on a persistent disk of the memory 112, and/or in a remote computing cloud accessible via the network 108. The electronic database may include one or more databases, each including respective sets of tables that enable the modules 120 to create, read, update and delete information. For example, the elution controller 130 may load preset parameters and coefficient information from the database 150. The serialization and storage module 136 may insert information into the database 150 at runtime.

In operation, one or more users of the client computing device 102 may access a graphical user interface displayed by the elution controller module 130. The graphical user interface may be packaged as a part of an application (*e.g.,* a desktop application, an iPhone or Android downloadable application for a mobile device, etc.). The user may provide initialization data. For example, the user may select one or more products and one or more respective elution columns (*e.g.,* corresponding to the chromatography column 106). In some embodiments, the environment 100 may include a plurality of remote process control systems 104. In that case, the user may select from among the plurality of remote process control systems 104 via the graphical user interface. In some embodiments the user may specify the remote process control system(s) by typing in one or more hostnames.

Having selected a remote process control system 104 and one or more products, the user may provide additional input parameters. The input parameters are discussed in more detail below. The elution controller module 130 may keep a list of selected remote process control systems 104, products and respective parameter sets in the memory 112. The user may then indicate that the elution process should begin, specifying one or more of the selected remote process control systems 104. For example, the user may press a "Go" button with respect to a first remote process control system 104, wherein the user has provided a number of parameters. In response to the user's selecting the button, the elution controller 130 may pass control flow to the calibration configuration module 132, whereupon the calibration configuration module 132 selects preset coefficients corresponding to the selected product. The calibration configuration module 132 may return the selected coefficients to the elution controller.

The elution controller module 130 may instantiate a communication link to the selected remote process control system 104, and store an object (*i.e.,* a handle or reference) to the communication link in the memory 112. The elution controller module 130 may determine an estimated total peak area and area collection criteria corresponding to the selected elution products. The elution controller module 130 may begin periodically reading data values via the communication link. The elution controller module 130 may offload processing of the data values to a peak area estimation model module 134 corresponding to the selected product and remote process control system 104. The remote process control system 104 may store one or more ordered data structures in the memory 112 and/or the database 150, and perform computations involving the values stored in the ordered data structures and data values received from the elution controller module 130, as described herein.

The elution controller module 130 may receive computation results from the estimation module 134, and pass the computations to the serialization and storage module 136. It should be appreciated that the elution controller module 130 may store separate communication links in the memory 112, and that the one or more processors 110 of the client computing device 102 may operate different stages of the above-described processing using multiple communication links in parallel. The processing performed by the modules 134 and 136 may block the elution controller 130, causing the elution 130 to be unable to read data from the remote process control system 104. By parallelizing processing of incoming data to the estimation model module 134 and the serialization and storage module 136 using a multi-threaded or multiprocessing approach, the present techniques advantageously allow a single client computing device 102 to granularly manage the operation of a practically unlimited number of remote process control systems 104, improving over conventional techniques that only provide single-threaded (and coarse) peak integration functionality.

In some embodiments, the serialization and storage module 136 may continuously store data in the database 150 as the elution controller module 130 reads data from the remote process control system 104. In further embodiments, the serialization and storage module 136 may cache data in the memory 112 until the elution controller module 130 causes the remote process control system 104 to cease collection of elution products, at which time the serialization and storage module 136 may perform a batch insert of the cached records into the database 150.

### Exemplary Visualization Embodiments

As noted, the computer-executable instructions of the memory 120 of Figure 2 may enable visualization of a pool collection process. The pool collection process may correspond to one or more chromatography analyses using buffer solutions. A process control system that is local or remote (*e.g.,* the remote process control system 104 of Figure 1) may be attached to one or more chromatography column buffer tanks (*e.g.,* a cylindrical vessel such as the column vessel 106). In operation, the remote process control system 104 may control the chromatography column via tubes valves and pumps . For example, the remote process control system 104 may pull buffer from a buffer supply and add the buffer to the column for cleaning ,equilibration, and operation of the column (*e.g.,* for washing the column after a sample is loaded). The remote process control system 104 may cause protein to flow into the column, and remove waste fluid from cleaning, equilibration and wash steps. The remote process control system 104 may cause elution of bound samples from the column. The elution may be isocratic, wherein the buffer solution is constant, or a gradient, wherein a plurality mixture of buffer formulations of different pH/conductivity are mixed over the course of the elution process to create a gradient based on changing salt/conductivity/pH. Regardless of the elution method used, the buffer may cause protein bound to the chromatography column to release and flow from the column in the eluate fluid. The remote process control system 104 may collect eluate as it flows through the column.

Figure 2 depicts an exemplary graph 200 of a pool collection process for improving control of process and automation systems to improve consistency and yield of elution product collection while avoiding impurities, according to an embodiment. When eluting from a column, the absorbance of the fluid leaving the column may be measured (*e.g.,* by the remote process control system 104). The absorbance may be measured at a particular wavelength (*e.g.,* 280nm) by ultraviolet in mAU units. This absorbance may be used to compute protein concentration in the sample compared to a standard curve, historical knowledge, published information, etc. The column may be eluted in fractions corresponding to a single column's worth of fluid (*i.e.,* fractional column volumes (CVs)), each of which are independently collected.

Over the course of the elution, the absorbance for each fraction may change, as more protein is eluted from the column as the gradient increases. The client computing device 102 may measure this change in absorbance, and graph the change as a curve in chromatograms depicting traces of absorbance readings of each fraction. For example, the graph 200 includes a Y axis 202-A representing milli-absorbance units (mAU) and an X axis 202-B representing milliliters. The graph 200 may represent a visual depiction of a lab-scale run of an elution process (*e.g.,* as described above) having a particular percentage of load mass and gradient. It will appreciated by those of ordinary skill in the art that in some embodiments, the graph 200 may depict change of conductivity or pH of the elution buffer. In some embodiments, the graph 200 may depict a fraction number (*e.g.,* from one to a predetermined point). The graph 200 includes an elution region 204 and a pool start point 206-A and a pool end point 206-B, depicting where the elution begins and ends and/or where waste collection begins. For example, the pool start point 206-A may begin at a particular percentage of load mass and percentage of start collection based on total peak area. The pool collection start point may be controlled by the elution controller 130 as discussed herein. The pool end point 206-B may correspond to a percentage (*e.g.,* 10%) of a peak maximum, based on a given wavelength.

The elution region 204 may correspond to an area in between lines designating the region that contains the fractions that contain the protein of interest, or a percentage of the protein of interest, wherein some negligible impurities are present. Such fractions may be pooled (*i.e.,* combined) and used in further elution. A cut may be a point designating the beginning of fractions containing the protein of interest. In the graph 200, the area under the curve may be the area from the beginning of the elution until the cut point where a protein of interest begins to elute.

The area under the curve may correspond to area from the start of elution until a cut point where protein of interest begins to elute. This area may correspond to area wherein impurities bound to the column with less affinity that a protein of interest are eluting from the column. These impurities may be forms of the protein of interest that are not appropriate for collection. For example, these impurities may be half of an antibody (*e.g.,* a single heavy chain and a single light chain), a part of a protein of interest, an aggregation of parts, or the protein of interest with incorrect post-translational features (*e.g.,* incorrect structural sugars, incomplete addition, etc.). In the case of a biosimilar, matching post-translational modifications is critical, because such impurities can affect the activity of the protein, reducing similarity to the innovator protein. So-called "product-related" impurities share features with a desired product, including binding affinity for the chromatography matrix, but are not the protein of interest, and as such, must be excluded from the final drug substance.

In some embodiments, the present techniques may cause visualizations including the graph 200 to be displayed in the device of a user (*e.g.,* the client computing device 102) during or after an elution procedure. In this way, the user can advantageously monitor the ongoing elution process, providing the user with feedback regarding the granular automation process missing from conventional techniques.

### Exemplary Computer-Implemented Methods

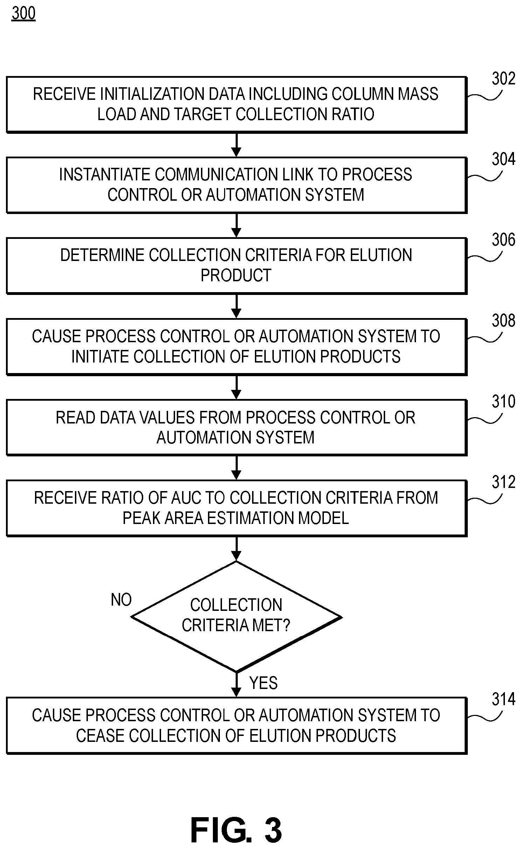

Figure 3 depicts a flow diagram of a computer-implemented method 300 for improving control of process and automation systems to improve consistency and yield of elution product collection while avoiding impurities, according to one embodiment and scenario. By way of example, and not limitation, one or more steps of the method 300 may be performed by the computing environment 100 of Figure 1.

The method 300 may include receiving, via one or more processors, initialization data including a column load mass and an initial collection ratio corresponding to one or more elution products (block 302). For example, the method 300 may display a graphical user interface (not depicted) via the I/O device 140 that includes one or more elements (*e.g.,* a drop-down menu, one or more input fields, etc.) that allow an end user to select one or more products and to provide respective parameters corresponding to the one or more products, aspects of the remote process control system 104, the column load mass, the initial collection ratio, etc. Following are example input parameters that could be input by the user, in an embodiment:

| **Parameter Name** | **Parameter Value** |
|---|---|
| hostname | UST0IC420373 |
| outlet line identifier | 1 |
| column load mass (milligrams, grams, etc.) | 1326.3 |
| start collection percentage | 38.0 |
| sample pump inlet line number | 1 |
| file name | 'AEX PC 052620 EXPT 1' |
| product | ABP 938 AEX |

The method 300 may include validating the initialization data types. For example, the method may verify that the outlet parameters are integer values. In some embodiments, the parameters may be received in standard input (*e.g*., as inputs from a comma-separated-value (CSV) file, flags to an automated script (*e.g*., via a cron job), etc.). It will be appreciated that a user need not necessarily manually provide parameters in via the I/O device 140, and that the initialization data may be received via automated means.

The method 300 may include instantiating, via the one or more processors, a communication link to a process control or automation system (block 304). For example, the process control or automation system of block 304 may correspond to the remote process control system 104 of Figure 1. Thus, the process control or automation system of block 304 may include a chromatography column vessel may corresponding to the chromatography column vessel 106 of Figure 1. The process control or automation system 104 may be any suitable system, such as an ÄKTA pure micro system, or an Emerson DeltaV Automation System. The present techniques are applicable to bench scale and larger scale process control/ automation environments.

Instantiating the communication link at block 304 may include creating one or more OPC links at the client computing device 102, for example. In some embodiments, other suitable communication links may be instantiated (*e*.*g*., a wireless link, a wired link, a stateless HTTP link, etc.). In general, the elution controller module 130 creates one or more objects in the memory 112 of the client computing device 102, wherein each object tracks the state of each respective communication link to the remote process control system 104. Each in-memory object provides the interface methods discussed above that enable the elution controller to access functionality of the remote process control system 104.

The method 300 may include determining, via the one or more processors, an estimated total peak area and an area collection criteria corresponding to the one or more elution products (block 306). In some embodiments, determining the estimated total peak area may include the calibration configurator 132 performing a linear regression of one or more historical calibration curves to estimate one or more coefficients, as discussed above. In this way, the elution controller module 130 may simply retrieve coefficients at runtime (*e.g.,* from the electronic database 150) that are product-specific and result in the correct total peak area computation, given a load mass initialization parameter. For example, the method 300 may determine total peak area by computing the product of the load mass initialization parameter and a coefficient (*e.g.,* 30.44) corresponding to the product input parameter (*i.e.,* ABP 938 AEX to continue the above example).

Of course, depending up on the product selected by the user or provided as a command-line input, a different coefficient may be selected based on the historical calibration curves. In this way, the present techniques are seen to advantageously improve over conventional techniques that do not include the ability of users to programmatically select parameters at runtime based on known-good product coefficient values. Because selecting the correct coefficients is used in further modeling computations, this flexibility directly leads to the present techniques enabling correct determination of collection begin/end times. Thus, the present techniques provide multi-faceted advantages over conventional techniques that are less granular and provide only generic "one-size-fits-all" peak integration functionality. The method 300 may determine an area under the curve collection criteria by computing the product of the total peak area and the start collection percentage. As noted, because the total peak area computation includes granular, product-specific coefficients, the collection criteria benefits from the added precision, grounded in empirical observation, over conventional peak integration approaches relying on more general (or hypothetical) inputs.

The method 300 may include causing, via the communication link, the process control or automation system 104 to begin collection of the one or more elution products (block 308). For example, in an embodiment, the elution controller 130 may invoke a collect() method of the AktaClass, as discussed above. In some embodiments, the elution controller 130 of the client computing device 102 may invoke another function, specific to another remote process control system 104 (*e.g.,* a specific method that causes a DeltaV system to begin collection). In some embodiments, the method 300 may include other methods that the elution controller 130 may invoke, such as those that cause mobile phase (*e.g.,* a buffer solution) to begin to flow through the chromatography column 106.

The method 300 may include reading, via the communication link, one or more data values from the process control or automation system (block 310). For example, once the method 300 causes the process control or automation system 104 to begin collection of the one or more elution products, the elution controller 130 may read data values such as ultraviolet absorbance and/or accumulated volume via the communication link. In some embodiments, the elution controller 130 may include instructions for repeatedly reading data from the process control or automation system 104. In some embodiments, the elution controller 130 may include instructions for introducing delay into the reading of data values from the process control or automation system 104. For example, the elution controller 130 may include instructions for periodically or iteratively collecting data, with a configurable delay in between iterations (*e.g.,* every 0.5 seconds).

The method 300 may include receiving, from a peak area estimation model analyzing the one or more data values, a ratio of collected area under curve corresponding to the collection of the one or more elution products to the collection criteria (block 312). The method 300 may include the elution controller 130 passing the read one or more data values from the process control or automation system 104 to the estimation model module 134. As discussed above, the elution controller 130 may periodically compute the area under the curve for the ongoing elution process.

The method 300 may include, causing, based on the ratio of collected area under curve to collection criteria, via the communication link, the process control or automation system to cease collection of the one or more elution products (block 314). For example, the elution controller 130 may compare the ratio of collected area under curve to the collection criteria, and once the ratio exceeds the collection criteria, the method may call a method of the object corresponding to the communication link, causing the remote process control or automation system 104 to switch the outlet valve, to cause collection of the product to cease. As discussed above, for example with respect to Figure 2, the method 300 may include causing a visualization to be displayed including the ratio of collected area under the curve to collection criteria during and after ceasing collection of the one or more elution products.

As noted above, the set of methods in the elution controller 130 enable various aspects of the remote process control or automation system 104 to be managed, and the state of the process control or automation system 104 to be inspected. Such management/inspection capabilities include gaining control, via the communication link, of the process control or automation system 104; releasing control, via the communication link, of the process control or automation system 104; switching, via the communication link, an outlet valve of the process control or automation system 104; confirming, via the communication link, an outlet valve position of the process control or automation system 104; switching, via the communication link, an inlet valve of the process control or automation system 104; confirming, via the communication link, an inlet valve position of the process control or automation system 104; and destroying, via the communication link, the communication link to the process control or automation system 104. As discussed above, the communication link may be an OPC communication link.

It should be appreciated that the examples provided herein are simplified for discussion purposes, and that some embodiments may include more complex layouts/configurations of the chromatography column vessel(s), process control and/or automation systems(s), computing device(s), etc. For example, the present techniques may be used to monitor the status of an array of chromatography column vessels in a bench setting, or in a large commercial production plant, in some embodiments.

### Additional Considerations

It should also be understood that when describing a range of values, the disclosure contemplates individual values found within the range. For example, "cell aggregate size of between about 20nm and about 200nm," could be, but is not limited to, 40nm, 60nm, 100nm, etc., and any value in between such values. In any of the ranges described herein, the endpoints of the range are included in the range. However, the description also contemplates the same ranges in which the lower and/or the higher endpoint is excluded.

It should also be understood that, unless a term is expressly defined in this patent using the sentence "As used herein, the term '_' is hereby defined to mean..." or a similar sentence, there is no intent to limit the meaning of that term, either expressly or by implication, beyond its plain or ordinary meaning, and such term should not be interpreted to be limited in scope based upon any statement made in any section of this patent (other than the language of the claims). To the extent that any term recited in the claims at the end of this disclosure is referred to in this disclosure in a manner consistent with a single meaning, that is done for sake of clarity only so as to not confuse the reader, and it is not intended that such claim term be limited, by implication or otherwise, to that single meaning. The systems and methods described herein are directed to an improvement to computer functionality, and improve the functioning of conventional computers.

Throughout this specification, the word "set", unless expressly defined otherwise, is hereby defined to mean a set having one or more elements, but not the empty set.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Additionally, certain embodiments are described herein as including logic or a number of routines, subroutines, applications, or instructions. These may constitute either software (code embodied on a non-transitory, tangible machine-readable medium) or hardware. In hardware, the routines, etc., are tangible units capable of performing certain operations and may be configured or arranged in a certain manner. In example embodiments, one or more computer systems (e.g., a standalone, client or server computer system) or one or more modules of a computer system (e.g., a processor or a group of processors) may be configured by software (e.g., an application or application portion) as a module that operates to perform certain operations as described herein.

In various embodiments, a module may be implemented mechanically or electronically. Accordingly, the term "module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which modules are temporarily configured (e.g., programmed), each of the modules need not be configured or instantiated at any one instance in time. For example, where the modules comprise a general-purpose processor configured using software, the general-purpose processor may be configured as respective different modules at different times. Software may accordingly configure a processor, for example, to constitute a particular module at one instance of time and to constitute a different module at a different instance of time.

Modules can provide information to, and receive information from, other modules. Accordingly, the described modules may be regarded as being communicatively coupled. Where multiple of such modules exist contemporaneously, communications may be achieved through signal transmission (e.g., over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation and store the output of that operation in a memory device to which it is communicatively coupled. A further module may then, at a later time, access the memory device to retrieve and process the stored output. Modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information. Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein any reference to "one embodiment" or "an embodiment" means that a particular element, feature, structure, or characteristic described in connection with the embodiment may be included in at least one embodiment. The appearances of the phrase "in one embodiment" in various places in the specification are not necessarily all referring to the same embodiment. In addition, use of the "a" or "an" are employed to describe elements and components of the embodiments herein. This is done merely for convenience and to give a general sense of the description. This description, and the claims that follow, should be read to include one or at least one and the singular also includes the plural unless it is obvious that it is meant otherwise.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

This detailed description is to be construed as exemplary only and does not describe every possible embodiment, as describing every possible embodiment would be impractical, if not impossible. One could implement numerous alternate embodiments, using either current technology or technology developed after the filing date of this application. Upon reading this disclosure, those of ordinary skill in the art will appreciate still additional alternative structural and functional designs for performing the system and method of the present disclosure through the disclosed principles herein. Thus, while particular embodiments and applications have been illustrated and described, it is to be understood that the disclosed embodiments are not limited to the precise construction and components disclosed herein. Various modifications, changes and variations, which will be apparent to those of ordinary skill in the art, may be made in the arrangement, operation and details of the method and apparatus disclosed herein without departing from the scope defined in the appended claims.

In addition, many modifications may be made to adapt a particular application, situation or material to the essential scope of the present invention defined by the claims. It is to be understood that other variations and modifications of the embodiments of the present invention described and illustrated herein are possible in light of the teachings herein and are to be considered part of the scope of the present invention.

While the preferred embodiments of the invention have been described, it should be understood that the invention is not so limited and modifications may be made without departing from the invention. The scope of the invention is defined by the appended claims.

## Claims

1. A computing system for improving control of process and automation systems to improve consistency and yield of elution product collection while avoiding impurities, comprising:
one or more processors;
an elution collection controller application including computing instructions configured to be executed by the one or more processors; and
a peak area estimation model, electronically accessible by the elution collection controller application and configured to analyze real-time process data received from the elution collection controller application to estimate one or more area under curve collection criteria;
wherein the instructions included in the elution collection controller application are configured, when executed by the one or more processors, to:
receive initialization data including a column load mass and an initial collection ratio corresponding to one or more elution products;
instantiate a communication link to a process control or automation system;
determine a) an estimated total peak area using the column load mass and b) an area collection criteria corresponding to the one or more elution products;
cause, via the communication link, the process control or automation system to begin collection of the one or more elution products;
read, via the communication link, one or more data values from the process control or automation system;
compute, via the peak area estimation model analyzing the one or more data values, a ratio of collected area under curve corresponding to the collection of the one or more elution products to the collection criteria; and
based on the ratio of collected area under curve to collection criteria, cause, via the communication link, the process control or automation system to cease collection of the one or more elution products.

2. The computing system of claim 1, the instructions included in the elution collection controller application further configured, when executed by the one or more processors, to:
gain control, via the communication link, of the process control or automation system;
release control, via the communication link, of the process control or automation system;
parse, via the communication link, the one or more data values from the process control or automation system into respective formatted data values;
switch, via the communication link, an outlet valve of the process control or automation system;
confirm, via the communication link, an outlet valve position of the process control or automation system;
switch, via the communication link, an inlet valve of the process control or automation system;
confirm, via the communication link, an inlet valve position of the process control or automation system; or
destroy, via the communication link, the communication link.

3. The computing system of either claim 1 or claim 2, wherein the communication link is an Open Platform Communication (OPC) communication link.

4. The computing system of any one of claims 1-3, the instructions included in the elution collection controller application further configured, when executed by the one or more processors, to:
determine the estimated total peak area and the area collection criteria corresponding to the one or more elution products using a linear regression of calibration curves specific to the one or more elution products.

5. The computing system of any one of claims 1-4, wherein the one or more data values read from the process control or automation system include one or both of (i) ultraviolet absorbance, and (ii) accumulated volume.

6. The computing system of any one of claims 1-5, wherein the process control or automation system is at least one of (i) an ÄKTA pure micro system, or (ii) an Emerson DeltaV Automation System.

7. The computing system of any one of claims 1-6, the instructions included in the elution collection controller application further configured, when executed by the one or more processors, to:
cause a visualization of the collection of the one or more elution products to be displayed in a graphical user interface of a user device, the visualization including an indication of the collection start percentage and an indication of the collection end percentage.

8. A computer-implemented method for improving control of process and automation systems to improve consistency and yield of elution product collection while avoiding impurities, comprising:
receiving, via one or more processors, initialization data including a column load mass and an initial collection ratio corresponding to one or more elution products;
instantiating, via the one or more processors, a communication link to a process control or automation system;
determining, via the one or more processors, a) an estimated total peak area using the column load mass and b) an area collection criteria corresponding to the one or more elution products;
causing, via the communication link, the process control or automation system to begin collection of the one or more elution products;
reading, via the communication link, one or more data values from the process control or automation system;
receiving, from a peak area estimation model analyzing the one or more data values, a ratio of collected area under curve corresponding to the collection of the one or more elution products to the collection criteria; and
based on the ratio of collected area under curve to collection criteria, causing, via the communication link, the process control or automation system to cease collection of the one or more elution products.

9. The computer-implemented method of claim 8, further comprising:
gaining control, via the communication link, of the process control or automation system;
releasing control, via the communication link, of the process control or automation system;
parsing, via the communication link, the one or more data values from the process control or automation system into respective formatted data values;
switching, via the communication link, an outlet valve of the process control or automation system;
confirming, via the communication link, an outlet valve position of the process control or automation system;
switching, via the communication link, an inlet valve of the process control or automation system;
confirming, via the communication link, an inlet valve position of the process control or automation system; or
destroying, via the communication link, the communication link.

10. The computer-implemented method of either claim 8 or claim 9, wherein the communication link is an Open Platform Communication (OPC) communication link.

11. The computer-implemented method of any one of claims 8-10, further comprising:
determining the estimated total peak area and the area collection criteria corresponding to the one or more elution products using a linear regression of calibration curves specific to the one or more elution products.

12. The computer-implemented method of any one of claims 8-11, wherein the one or more data values read from the process control or automation system include one or both of (i) ultraviolet absorbance, and (ii) accumulated volume; and/or
wherein the process control or automation system is at least one of (i) an ÄKTA pure micro system, or (ii) an Emerson DeltaV Automation System.

13. The computer-implemented method of any one of claims 8-12, further comprising:
causing a visualization of the collection of the one or more elution products to be displayed in a graphical user interface of a user device, the visualization including an indication of the collection start percentage and an indication of the collection end percentage.

14. A non-transitory computer readable medium containing program instructions that when executed, cause a computer to:
receive initialization data including a column load mass and an initial collection ratio corresponding to one or more elution products;
instantiate a communication link to a process control or automation system;
determine a) an estimated total peak area using the column load mass and b) an area collection criteria corresponding to the one or more elution products;
cause, via the communication link, the process control or automation system to begin collection of the one or more elution products;
read, via the communication link, one or more data values from the process control or automation system;
compute, via a peak area estimation model analyzing the one or more data values, a ratio of collected area under curve corresponding to the collection of the one or more elution products to the collection criteria; and
based on the ratio of collected area under curve to collection criteria, cause, via the communication link, the process control or automation system to cease collection of the one or more elution products.

15. The non-transitory computer readable medium of claim 14, containing further program instructions that when executed, cause a computer to:
gain control, via the communication link, of the process control or automation system;
release control, via the communication link, of the process control or automation system;
parse, via the communication link, the one or more data values from the process control or automation system into respective formatted data values;
switch, via the communication link, an outlet valve of the process control or automation system;
confirm, via the communication link, an outlet valve position of the process control or automation system;
switch, via the communication link, an inlet valve of the process control or automation system;
confirm, via the communication link, an inlet valve position of the process control or automation system; or
destroy, via the communication link, the communication link and/or;
wherein the communication link is an Open Platform Communication (OPC) communication link and/or;
containing further program instructions that when executed, cause a computer to:
determine the estimated total peak area and the area collection criteria corresponding to the one or more elution products using a linear regression of calibration curves specific to the one or more elution products.

## Patentansprüche

1. Computersystem zur Verbesserung der Steuerung von Prozess- und Automatisierungssystemen, um die Konsistenz und Ausbeute der Elutionsproduktsammlung zu verbessern und gleichzeitig Verunreinigungen zu vermeiden, umfassend:
einen oder mehrere Prozessoren;
eine Anwendung zur Steuerung der Elutionssammlung, die Computeranweisungen enthält, die so konfiguriert sind, dass sie von dem einen oder den mehreren Prozessoren ausgeführt werden; und
ein Peakflächen-Schätzmodell, auf das die Anwendung zur Steuerung der Elutionssammlung elektronisch zugreifen kann und das so konfiguriert ist, dass es von der Anwendung zur Steuerung der Elutionssammlung empfangene Echtzeit-Prozessdaten analysiert, um ein oder mehrere Kriterien für die Sammlung der Fläche unter der Kurve zu schätzen;
wobei die in der Anwendung zur Steuerung der Elutionssammlung enthaltenen Befehle, wenn sie von dem einen oder den mehreren Prozessoren ausgeführt werden, für Folgendes konfiguriert sind:
Empfangen von Initialisierungsdaten, die eine Säulenbeladungsmasse und ein anfängliches Sammelverhältnis entsprechend einem oder mehreren Elutionsprodukten umfassen;
Herstellen einer Kommunikationsverbindung zu einem Prozesssteuerungs- oder Automatisierungssystem;
Bestimmen von a) einer geschätzten Gesamtpeakfläche unter Verwendung der Säulenbeladungsmasse und b) eines Flächenerfassungskriteriums entsprechend dem einen oder den mehreren Elutionsprodukten;
Bewirken, über die Kommunikationsverbindung, dass das Prozesssteuerungs- oder Automatisierungssystem mit der Erfassung des einen oder der mehreren Elutionsprodukte beginnt;
Auslesen, über die Kommunikationsverbindung, eines oder mehrerer Datenwerte aus dem Prozesssteuerungs- oder Automatisierungssystem;
Berechnen, über das Peakflächen-Schätzmodell, das den einen oder die mehreren Datenwerte analysiert, eines Verhältnisses der gesammelten Fläche unter der Kurve, das der Sammlung des einen oder der mehreren Elutionsprodukte entspricht, zu den Sammelkriterien; und
basierend auf dem Verhältnis der gesammelten Fläche unter der Kurve zu den Sammelkriterien, Veranlassen, über die Kommunikationsverbindung, dass das Prozesssteuerungs- oder Automatisierungssystem die Sammlung des einen oder der mehreren Elutionsprodukte beendet.

2. Computersystem nach Anspruch 1, wobei die in der Anwendung zur Steuerung der Elutionssammlung enthaltenen Befehle, wenn sie von dem einen oder den mehreren Prozessoren ausgeführt werden, für Folgendes konfiguriert sind:
Übernehmen der Steuerung, über die Kommunikationsverbindung, des Prozesssteuerungs- oder Automatisierungssystems;
Freigeben der Steuerung, über die Kommunikationsverbindung, des Prozesssteuerungs- oder Automatisierungssystems;
Parsen, über die Kommunikationsverbindung, des einen oder der mehreren Datenwerte aus dem Prozesssteuerungs- oder Automatisierungssystem in entsprechende formatierte Datenwerte;
Schalten, über die Kommunikationsverbindung, eines Auslassventils des Prozesssteuerungs- oder Automatisierungssystems;
Bestätigen, über die Kommunikationsverbindung, einer Auslassventilposition des Prozesssteuerungs- oder Automatisierungssystems;
Schalten, über die Kommunikationsverbindung, eines Einlassventils des Prozesssteuerungs- oder Automatisierungssystems;
Bestätigen, über die Kommunikationsverbindung, einer Einlassventilposition des Prozesssteuerungs- oder Automatisierungssystems; oder
Aufheben, über die Kommunikationsverbindung, der Kommunikationsverbindung.

3. Computersystem nach Anspruch 1 oder Anspruch 2, wobei die Kommunikationsverbindung eine Open Platform Communication- (OPC) Kommunikationsverbindung ist.

4. Computersystem nach einem der Ansprüche 1-3, wobei die in der Anwendung zur Steuerung der Elutionssammlung enthaltenen Befehle, wenn sie von dem einen oder den mehreren Prozessoren ausgeführt werden, für Folgendes konfiguriert sind:
Bestimmen der geschätzten Gesamtpeakfläche und die Flächenerfassungskriterien, die dem einen oder den mehreren Elutionsprodukten entsprechen, unter Verwendung einer linearen Regression von Kalibrierungskurven, die für das eine oder die mehreren Elutionsprodukte spezifisch sind.

5. Computersystem nach einem der Ansprüche 1-4, wobei der eine oder die mehreren aus dem Prozesssteuerungs- oder Automatisierungssystem gelesenen Datenwerte entweder (i) die Ultraviolett-Absorption oder (ii) das akkumulierte Volumen oder beides enthalten.

6. Computersystem nach einem der Ansprüche 1-5, wobei das Prozesssteuerungs- oder Automatisierungssystem mindestens eines von (i) einem ÄKTA Pure Micro-System oder (ii) einem Emerson DeltaV-Automatisierungssystem ist.

7. Computersystem nach einem der Ansprüche 1-6, wobei die in der Anwendung zur Steuerung der Elutionssammlung enthaltenen Befehle, wenn sie von dem einen oder den mehreren Prozessoren ausgeführt werden, für Folgendes konfiguriert sind:
Bewirken, dass eine Visualisierung der Sammlung des einen oder der mehreren Elutionsprodukte in einer grafischen Benutzeroberfläche einer Benutzervorrichtung angezeigt wird, wobei die Visualisierung eine Angabe des Prozentsatzes des Sammlungsbeginns und eine Angabe des Prozentsatzes des Sammlungsendes umfasst.

8. Computerimplementiertes Verfahren zur Verbesserung der Steuerung von Prozess- und Automatisierungssystemen, um die Konsistenz und Ausbeute der Elutionsproduktsammlung zu verbessern und gleichzeitig Verunreinigungen zu vermeiden, umfassend:
Empfangen, über einen oder mehrere Prozessoren, von Initialisierungsdaten, die eine Säulenbeladungsmasse und ein anfängliches Sammelverhältnis entsprechend einem oder mehreren Elutionsprodukten umfassen;
Herstellen, über einen oder mehrere Prozessoren, einer Kommunikationsverbindung zu einem Prozesssteuerungs- oder Automatisierungssystem;
Bestimmen, über einen oder mehrere Prozessoren, von a) einer geschätzten Gesamtpeakfläche unter Verwendung der Säulenbeladungsmasse und b) eines Flächenerfassungskriteriums entsprechend dem einen oder den mehreren Elutionsprodukten;
Bewirken, über die Kommunikationsverbindung, dass das Prozesssteuerungs- oder Automatisierungssystem mit der Erfassung des einen oder der mehreren Elutionsprodukte beginnt;
Auslesen, über die Kommunikationsverbindung, eines oder mehrerer Datenwerte aus dem Prozesssteuerungs- oder Automatisierungssystem;
Empfangen, von einem Peakflächen-Schätzmodell, das den einen oder die mehreren Datenwerte analysiert, eines Verhältnisses der gesammelten Fläche unter der Kurve, das der Sammlung des einen oder der mehreren Elutionsprodukte entspricht, zu den Sammelkriterien; und
basierend auf dem Verhältnis der gesammelten Fläche unter der Kurve zu den Sammelkriterien, Veranlassen, über die Kommunikationsverbindung, dass das Prozesssteuerungs- oder Automatisierungssystem die Sammlung des einen oder der mehreren Elutionsprodukte beendet.

9. Computerimplementiertes Verfahren nach Anspruch 8, das ferner umfasst:
Übernehmen der Steuerung, über die Kommunikationsverbindung, des Prozesssteuerungs- oder Automatisierungssystems;
Freigeben der Steuerung, über die Kommunikationsverbindung, des Prozesssteuerungs- oder Automatisierungssystems;
Parsen, über die Kommunikationsverbindung, des einen oder der mehreren Datenwerte aus dem Prozesssteuerungs- oder Automatisierungssystem in entsprechende formatierte Datenwerte;
Schalten, über die Kommunikationsverbindung, eines Auslassventils des Prozesssteuerungs- oder Automatisierungssystems;
Bestätigen, über die Kommunikationsverbindung, einer Auslassventilposition des Prozesssteuerungs- oder Automatisierungssystems;
Schalten, über die Kommunikationsverbindung, eines Einlassventils des Prozesssteuerungs- oder Automatisierungssystems;
Bestätigen, über die Kommunikationsverbindung, einer Einlassventilposition des Prozesssteuerungs- oder Automatisierungssystems; oder
Aufheben, über die Kommunikationsverbindung, der
Kommunikationsverbindung.

10. Computerimplementiertes Verfahren nach Anspruch 8 oder Anspruch 9, wobei die Kommunikationsverbindung eine Open Platform Communication- (OPC) Kommunikationsverbindung ist.

11. Computerimplementiertes Verfahren nach einem der Ansprüche 8-10, das ferner umfasst:
Bestimmen der geschätzten Gesamtpeakfläche und die Flächenerfassungskriterien, die dem einen oder den mehreren Elutionsprodukten entsprechen, unter Verwendung einer linearen Regression von Kalibrierungskurven, die für das eine oder die mehreren Elutionsprodukte spezifisch sind.

12. Computerimplementiertes Verfahren nach einem der Ansprüche 8-11, wobei der eine oder die mehreren aus dem Prozesssteuerungs- oder Automatisierungssystem gelesenen Datenwerte entweder (i) die Ultraviolett-Absorption oder (ii) das akkumulierte Volumen oder beides enthalten; und/oder
wobei das Prozesssteuerungs- oder Automatisierungssystem mindestens eines von (i) einem ÄKTA Pure Micro-System oder (ii) einem Emerson DeltaV-Automatisierungssystem ist.

13. Computerimplementiertes Verfahren nach einem der Ansprüche 8-12, das ferner umfasst:
Bewirken, dass eine Visualisierung der Sammlung des einen oder der mehreren Elutionsprodukte in einer grafischen Benutzeroberfläche einer Benutzervorrichtung angezeigt wird, wobei die Visualisierung eine Angabe des Prozentsatzes des Sammlungsbeginns und eine Angabe des Prozentsatzes des Sammlungsendes umfasst.

14. Nicht-flüchtiges, computerlesbares Medium, das Programmbefehle enthält, die bei ihrer Ausführung einen Computer zu Folgendem veranlassen:
Empfangen von Initialisierungsdaten, die eine Säulenbeladungsmasse und ein anfängliches Sammelverhältnis entsprechend einem oder mehreren Elutionsprodukten umfassen;
Herstellen einer Kommunikationsverbindung zu einem Prozesssteuerungs- oder Automatisierungssystem;
Bestimmen von a) einer geschätzten Gesamtpeakfläche unter Verwendung der Säulenbeladungsmasse und b) eines Flächenerfassungskriteriums entsprechend dem einen oder den mehreren Elutionsprodukten;
Bewirken, über die Kommunikationsverbindung, dass das Prozesssteuerungs- oder Automatisierungssystem mit der Erfassung des einen oder der mehreren Elutionsprodukte beginnt;
Auslesen, über die Kommunikationsverbindung, eines oder mehrerer Datenwerte aus dem Prozesssteuerungs- oder Automatisierungssystem;
Berechnen, über ein Peakflächen-Schätzmodell, das den einen oder die mehreren Datenwerte analysiert, eines Verhältnisses der gesammelten Fläche unter der Kurve, das der Sammlung des einen oder der mehreren Elutionsprodukte entspricht, zu den Sammelkriterien; und
basierend auf dem Verhältnis der gesammelten Fläche unter der Kurve zu den Sammelkriterien, Veranlassen, über die Kommunikationsverbindung, dass das Prozesssteuerungs- oder Automatisierungssystem die Sammlung des einen oder der mehreren Elutionsprodukte beendet.

15. Nicht-flüchtiges, computerlesbares Medium nach Anspruch 14, das ferner Programmbefehle enthält, die bei ihrer Ausführung einen Computer zu Folgendem veranlassen:
Übernehmen der Steuerung, über die Kommunikationsverbindung, des Prozesssteuerungs- oder Automatisierungssystems;
Freigeben der Steuerung, über die Kommunikationsverbindung, des Prozesssteuerungs- oder Automatisierungssystems;
Parsen, über die Kommunikationsverbindung, des einen oder der mehreren Datenwerte aus dem Prozesssteuerungs- oder Automatisierungssystem in entsprechende formatierte Datenwerte;
Schalten, über die Kommunikationsverbindung, eines Auslassventils des Prozesssteuerungs- oder Automatisierungssystems;
Bestätigen, über die Kommunikationsverbindung, einer Auslassventilposition des Prozesssteuerungs- oder Automatisierungssystems;
Schalten, über die Kommunikationsverbindung, eines Einlassventils des Prozesssteuerungs- oder Automatisierungssystems;
Bestätigen, über die Kommunikationsverbindung, einer Einlassventilposition des Prozesssteuerungs- oder Automatisierungssystems; oder
Aufheben, über die Kommunikationsverbindung, der Kommunikationsverbindung und/oder;
wobei die Kommunikationsverbindung eine Open Platform Communication- (OPC) Kommunikationsverbindung ist und/oder;
weitere Programmbefehle enthält, die bei ihrer Ausführung einen Computer zu Folgendem veranlassen:
Bestimmen der geschätzten Gesamtpeakfläche und die Flächenerfassungskriterien, die dem einen oder den mehreren Elutionsprodukten entsprechen, unter Verwendung einer linearen Regression von Kalibrierungskurven, die für das eine oder die mehreren Elutionsprodukte spezifisch sind.

## Revendications

1. Système informatique pour optimiser des systèmes de commande de processus et d'automatisation pour optimiser l'uniformité et le rendement de collecte de produits d'élution tout en évitant des impuretés, comprenant :
un ou plusieurs processeurs ;
une application d'unité de commande de collecte d'élution incluant des instructions informatiques configurées pour être exécutées par l'un ou les plusieurs processeurs ; et
un modèle d'estimation d'aire de pic, auquel peut accéder électroniquement l'application d'unité de commande de collecte d'élution et configuré pour analyser des données de processus en temps réel reçues en provenance de l'application d'unité de commande de collecte d'élution pour estimer un ou plusieurs critères de collecte d'aire sous la courbe ;
dans lequel les instructions incluses dans l'application d'unité de commande de collecte d'élution sont configurées, lorsqu'elles sont exécutées par l'un ou les plusieurs processeurs, pour :
recevoir des données d'initialisation incluant une masse de charge de colonne et un rapport de collecte initial correspondant à un ou à plusieurs produits d'élution ;
instancier une liaison de communication à un système de commande ou d'automatisation de processus ;
déterminer a) une aire de pic totale estimée, en utilisant la masse de charge de colonne, et b) un critère de collecte d'aire correspondant à l'un ou aux plusieurs produits d'élution ;
amener, par l'intermédiaire de la liaison de communication, le système de commande ou d'automatisation de processus à commencer la collecte de l'un ou des plusieurs produits d'élution ;
lire, par l'intermédiaire de la liaison de communication, une ou plusieurs valeurs de données en provenance du système de commande ou d'automatisation de processus ;
calculer, par l'intermédiaire du modèle d'estimation d'aire de pic analysant l'une ou les plusieurs valeurs de données, un rapport d'aire sous la courbe collectée correspondant à la collecte de l'un ou des plusieurs produits d'élution relativement au critère de collecte ; et
sur la base du rapport d'aire sous la courbe collectée relativement au critère de collecte, amener, par l'intermédiaire de la liaison de communication, le système de commande ou d'automatisation de processus à cesser la collecte de l'un ou des plusieurs produits d'élution.

2. Système informatique de la revendication 1, les instructions incluses dans l'application d'unité de commande de collecte d'élution étant en outre configurées, lorsqu'elles sont exécutées par l'un ou les plusieurs processeurs, pour :
obtenir la commande, par l'intermédiaire de la liaison de communication, du système de commande ou d'automatisation de processus ;
céder la commande, par l'intermédiaire de la liaison de communication, du système de commande ou d'automatisation de processus ;
effectuer l'analyse syntaxique, par l'intermédiaire de la liaison de communication, de l'une ou des plusieurs valeurs de données, en provenance du système de commande ou d'automatisation de processus, en valeurs de données formatées respectives ;
commuter, par l'intermédiaire de la liaison de communication, une vanne de sortie du système de commande ou d'automatisation de processus ;
confirmer, par l'intermédiaire de la liaison de communication, une position de vanne de sortie du système de commande ou d'automatisation de processus ;
commuter, par l'intermédiaire de la liaison de communication, une vanne d'entrée du système de commande ou d'automatisation de processus ;
confirmer, par l'intermédiaire de la liaison de communication, une position de vanne d'entrée du système de commande ou d'automatisation de processus ; ou
supprimer, par l'intermédiaire de la liaison de communication, la liaison de communication.

3. Système informatique de l'une ou de l'autre de la revendication 1 ou de la revendication 2, dans lequel la liaison de communication est une liaison de communication OPC (Open Platform Communication).

4. Système informatique de l'une quelconque des revendications 1 à 3, les instructions incluses dans l'application d'unité de commande de collecte d'élution étant en outre configurées, lorsqu'elles sont exécutées par l'un ou les plusieurs processeurs, pour :
déterminer l'aire de pic totale estimée et le critère de collecte d'aire correspondant à l'un ou aux plusieurs produits d'élution en utilisant une régression linéaire de courbes d'étalonnage spécifiques à l'un ou aux plusieurs produits d'élution.

5. Système informatique de l'une quelconque des revendications 1 à 4, dans lequel l'une ou les plusieurs valeurs de données lues en provenance du système de commande ou d'automatisation de processus incluent un ou les deux éléments parmi (i) absorbance ultraviolette, et (ii) volume accumulé.

6. Système informatique de l'une quelconque des revendications 1 à 5, dans lequel le système de commande ou d'automatisation de processus est au moins un système parmi (i) un microsystème ÄKTA pure, ou (ii) un système d'automatisation Emerson DeltaV.

7. Système informatique de l'une quelconque des revendications 1 à 6, les instructions incluses dans l'application d'unité de commande de collecte d'élution étant en outre configurées, lorsqu'elles sont exécutées par l'un ou les plusieurs processeurs, pour :
amener une visualisation de la collecte de l'un ou des plusieurs produits d'élution à être affichée dans une interface utilisateur graphique d'un dispositif utilisateur, la visualisation incluant une indication du pourcentage de début de collecte et une indication du pourcentage de fin de collecte.

8. Procédé mis en œuvre par ordinateur pour optimiser des systèmes de commande de processus et d'automatisation pour optimiser l'uniformité et le rendement de collecte de produits d'élution tout en évitant des impuretés, comprenant les faits :
de recevoir, par l'intermédiaire d'un ou plusieurs processeurs, des données d'initialisation incluant une masse de charge de colonne et un rapport de collecte initial correspondant à un ou à plusieurs produits d'élution ;
d'instancier, par l'intermédiaire de l'un ou des plusieurs processeurs, une liaison de communication à un système de commande ou d'automatisation de processus ;
de déterminer, par l'intermédiaire de l'un ou des plusieurs processeurs, a) une aire de pic totale estimée, en utilisant la masse de charge de colonne, et b) un critère de collecte d'aire correspondant à l'un ou aux plusieurs produits d'élution ;
d'amener, par l'intermédiaire de la liaison de communication, le système de commande ou d'automatisation de processus à commencer la collecte de l'un ou des plusieurs produits d'élution ;
de lire, par l'intermédiaire de la liaison de communication, une ou plusieurs valeurs de données en provenance du système de commande ou d'automatisation de processus ;
de recevoir, en provenance d'un modèle d'estimation d'aire de pic analysant l'une ou les plusieurs valeurs de données, un rapport d'aire sous la courbe collectée correspondant à la collecte de l'un ou des plusieurs produits d'élution relativement au critère de collecte ; et
sur la base du rapport d'aire sous la courbe collectée relativement au critère de collecte, d'amener, par l'intermédiaire de la liaison de communication, le système de commande ou d'automatisation de processus à cesser la collecte de l'un ou des plusieurs produits d'élution.

9. Procédé mis en œuvre par ordinateur de la revendication 8, comprenant en outre les faits :
d'obtenir la commande, par l'intermédiaire de la liaison de communication, du système de commande ou d'automatisation de processus ;
de céder la commande, par l'intermédiaire de la liaison de communication, du système de commande ou d'automatisation de processus ;
d'effectuer l'analyse syntaxique, par l'intermédiaire de la liaison de communication, de l'une ou des plusieurs valeurs de données, en provenance du système de commande ou d'automatisation de processus, en valeurs de données formatées respectives ;
de commuter, par l'intermédiaire de la liaison de communication, une vanne de sortie du système de commande ou d'automatisation de processus ;
de confirmer, par l'intermédiaire de la liaison de communication, une position de vanne de sortie du système de commande ou d'automatisation de processus ;
de commuter, par l'intermédiaire de la liaison de communication, une vanne d'entrée du système de commande ou d'automatisation de processus ;
de confirmer, par l'intermédiaire de la liaison de communication, une position de vanne d'entrée du système de commande ou d'automatisation de processus ; ou
de supprimer, par l'intermédiaire de la liaison de communication, la liaison de communication.

10. Procédé mis en œuvre par ordinateur de l'une ou de l'autre de la revendication 8 ou de la revendication 9, dans lequel la liaison de communication est une liaison de communication OPC (Open Platform Communication).

11. Procédé mis en œuvre par ordinateur de l'une quelconque des revendications 8 à 10, comprenant en outre :
le fait de déterminer l'aire de pic totale estimée et le critère de collecte d'aire correspondant à l'un ou aux plusieurs produits d'élution en utilisant une régression linéaire de courbes d'étalonnage spécifiques à l'un ou aux plusieurs produits d'élution.

12. Procédé mis en œuvre par ordinateur de l'une quelconque des revendications 8 à 11, dans lequel l'une ou les plusieurs valeurs de données lues en provenance du système de commande ou d'automatisation de processus incluent un ou les deux éléments parmi (i) absorbance ultraviolette, et (ii) volume accumulé ; et/ou
dans lequel le système de commande ou d'automatisation de processus est au moins un système parmi (i) un microsystème ÄKTA pure, ou (ii) un système d'automatisation Emerson DeltaV.

13. Procédé mis en œuvre par ordinateur de l'une quelconque des revendications 8 à 12, comprenant en outre :
le fait d'amener une visualisation de la collecte de l'un ou des plusieurs produits d'élution à être affichée dans une interface utilisateur graphique d'un dispositif utilisateur, la visualisation incluant une indication du pourcentage de début de collecte et une indication du pourcentage de fin de collecte.

14. Support non transitoire lisible par ordinateur contenant des instructions de programme qui, lorsqu'elles sont exécutées, amènent un ordinateur :
à recevoir des données d'initialisation incluant une masse de charge de colonne et un rapport de collecte initial correspondant à un ou plusieurs produits d'élution ;
à instancier une liaison de communication à un système de commande ou d'automatisation de processus ;
à déterminer a) une aire de pic totale estimée, en utilisant la masse de charge de colonne, et b) un critère de collecte d'aire correspondant à l'un ou aux plusieurs produits d'élution ;
à amener, par l'intermédiaire de la liaison de communication, le système de commande ou d'automatisation de processus à commencer la collecte de l'un ou des plusieurs produits d'élution ;
à lire, par l'intermédiaire de la liaison de communication, une ou plusieurs valeurs de données en provenance du système de commande ou d'automatisation de processus ;
à calculer, par l'intermédiaire d'un modèle d'estimation d'aire de pic analysant l'une ou les plusieurs valeurs de données, un rapport d'aire sous la courbe collectée correspondant à la collecte de l'un ou des plusieurs produits d'élution relativement au critère de collecte ; et
sur la base du rapport d'aire sous la courbe collectée relativement au critère de collecte, à amener, par l'intermédiaire de la liaison de communication, le système de commande ou d'automatisation de processus à cesser la collecte de l'un ou des plusieurs produits d'élution.

15. Support non transitoire lisible par ordinateur de la revendication 14, contenant des instructions de programme supplémentaires qui, lorsqu'elles sont exécutées, amènent un ordinateur :
à obtenir la commande, par l'intermédiaire de la liaison de communication, du système de commande ou d'automatisation de processus ;
à céder la commande, par l'intermédiaire de la liaison de communication, du système de commande ou d'automatisation de processus ;
à effectuer l'analyse syntaxique, par l'intermédiaire de la liaison de communication, de l'une ou des plusieurs valeurs de données, en provenance du système de commande ou d'automatisation de processus, en valeurs de données formatées respectives ;
à commuter, par l'intermédiaire de la liaison de communication, une vanne de sortie du système de commande ou d'automatisation de processus ;
à confirmer, par l'intermédiaire de la liaison de communication, une position de vanne de sortie du système de commande ou d'automatisation de processus ;
à commuter, par l'intermédiaire de la liaison de communication, une vanne d'entrée du système de commande ou d'automatisation de processus ;
à confirmer, par l'intermédiaire de la liaison de communication, une position de vanne d'entrée du système de commande ou d'automatisation de processus ; ou
à supprimer, par l'intermédiaire de la liaison de communication, la liaison de communication ;
et/ou
dans lequel la liaison de communication est une liaison de communication OPC (Open Platform Communication) ; et/ou
contenant des instructions de programme supplémentaires qui, lorsqu'elles sont exécutées, amènent un ordinateur :
à déterminer l'aire de pic totale estimée et le critère de collecte d'aire correspondant à l'un ou aux plusieurs produits d'élution en utilisant une régression linéaire de courbes d'étalonnage spécifiques à l'un ou aux plusieurs produits d'élution.
